# FASCICULE DE BREVET EUROPEEN

(11) **EP 2 466 529 B1**
(45) Date de publication et mention de la délivrance du brevet: **04.11.2015**
(21) Numéro de dépôt: 11193006.1
(22) Date de dépôt: 12.12.2011
(51) Int. Cl.: G06F 21/55, G06K 19/073

(54) **Carte à microcircuit protégée par un fusible**
Mikrochipkarte, die durch eine Sicherung geschützt ist
Fuse-protected chip card

(30) Priorité: 14.12.2010 FR 1060464
(43) Date de publication de la demande: 20.06.2012
(73) Titulaire: Oberthur Technologies, 92300 Levallois Perret (FR)
(72) Inventeur: Morin, Nicolas, 92000 Nanterre (FR); Giraud, Christophe, 92000 Nanterre (FR)
(74) Mandataire: Delumeau, François Guy

(56) Documents cités:
- EP-A1- 2 164 053
- FR-A1- 2 513 408
- US-B1- 6 268 760

## Description

La présente invention se situe dans le domaine de la protection des modules électroniques.

Elle s'applique de façon privilégiée mais non limitative pour la protection d'une carte à microcircuit, par exemple conforme à la norme ISO 7816.

Le document EP 2 164 053 décrit un procédé de protection d'une carte à puce contre des attaques physiques en utilisant tout ou partie de l'énergie emmenée par l'attaque pour réaliser une action de contre-attaque.

Le document FR 2 513 408 décrit un support d'informations secrètes comportant un circuit logique d'authentification apte à détecter des tentatives d'usage non conformes.

Le document US 6 268 760 décrit un circuit comprenant un transistor relié en série à un fusible, et une porte inverseuse. Le transistor impose un signal haut en entrée de la porte inverseuse lorsque le fusible est grillé. La sortie de cette porte inverseuse est un signal de contrôle V2 dont le niveau est haut en fonctionnement normal et bas lorsqu'une attaque est détectée. Le signal de contrôle peut être utilisé pour forcer un signal vital à un niveau bas lorsqu'une attaque a été détectée.

Dans le cadre de la protection des cartes à microcircuit contre les attaques par injection de faute, une contre-mesure connue consiste à écrire une valeur prédéterminée dans une zone réservée d'une mémoire non volatile de la carte ne pouvant être écrite qu'une seule fois, connue de l'homme du métier sous l'acronyme OTP (One Time Programmable).

L'invention vise une solution alternative.

### Objet et résumé de l'invention

Plus précisément, l'invention concerne un module selon la revendication 1.

Dans un mode particulier de réalisation de l'invention, les moyens de commande sont aptes à commander le chargement d'un condensateur en fonctionnement normal (c'est-à-dire lorsqu'aucune attaque n'est détectée) et à commander la décharge de ce condensateur pour griller le fusible lorsqu'une attaque est détectée.

La fusion de ce fusible empêche physiquement la carte de fonctionner.

Grâce à l'invention, un attaquant n'est pas en mesure d'empêcher la destruction du fusible.

Ce signal vital peut être choisi parmi un signal de réinitialisation, un signal d'horloge ou un signal d'entrée/sortie en liaison avec un équipement externe au module.

Dans un mode particulier de réalisation, le module selon l'invention est constitué par une carte à microcircuit conforme à la norme ISO 7816.

### Brève description des dessins

D'autres caractéristiques et avantages de la présente invention ressortiront de la description faite ci-dessous en référence aux dessins annexés qui en illustrent un exemple de réalisation dépourvu de tout caractère limitatif.

### Description détaillée de l'invention

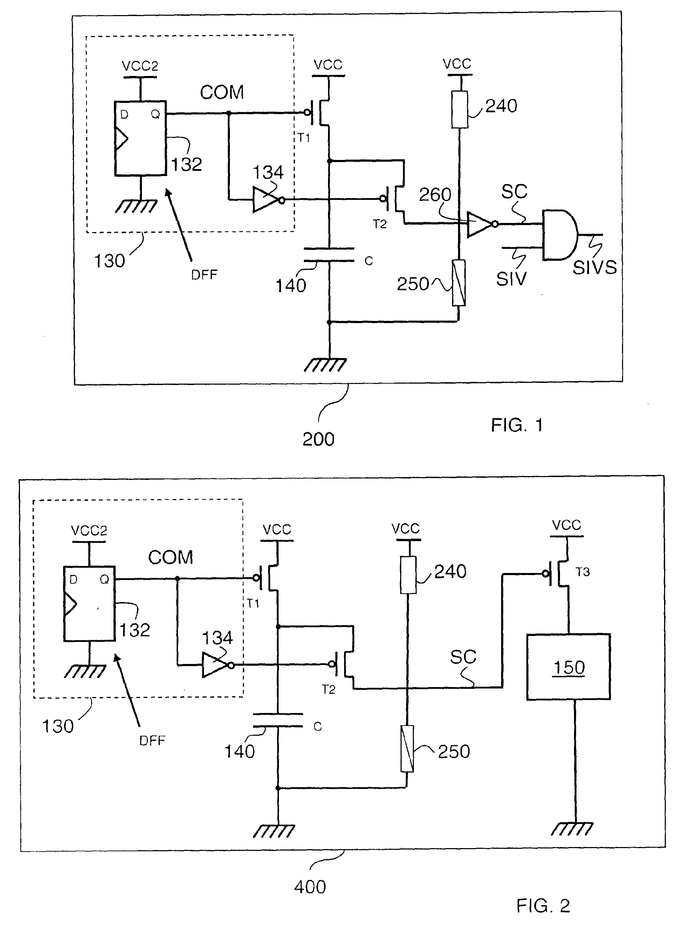

La **figure 1** représente un module 200 conforme à un mode de réalisation de l'invention.

Ce module est constitué dans cet exemple par une carte à microcircuit conforme à la norme ISO 7816.

Cette carte à microcircuit est apte à basculer un signal de contrôle SC d'un niveau haut en fonctionnement normal à un niveau bas lorsqu'une attaque est détectée sur la carte à microcircuit 200. Une telle attaque peut par exemple être détectée en réalisant deux fois une opération et en comparant les sorties correspondantes, mais la détection de l'attaque à proprement parler n'est pas l'objet de l'invention.

La carte à microcircuit 200 comporte des moyens 130 pour aptes à générer une commande COM à un premier niveau en fonctionnement normal (niveau bas NB) et à un deuxième niveau lorsqu'une attaque est détectée (niveau haut NH).

Dans le mode de réalisation décrit ici ces moyens de commande comportent une bascule D 132 et une porte inverseuse 134. La bascule D 132 correspond à un bit qui commande le basculement du signal de contrôle SC.

Autrement dit, dans cet exemple, la détection d'une attaque se traduit par le basculement de la sortie de la bascule D 132 du niveau bas (NB) au niveau haut (NH).

La carte à microcircuit comporte un condensateur 140 alimenté en fonctionnement normal par une tension VCC.

Dans le mode de réalisation décrit ici, une borne du condensateur 140 est reliée à un interrupteur T1 passant en fonctionnement normal, de sorte à pouvoir charger le condensateur. Cet interrupteur T1 est constitué par un transistor PMOS relié directement à la sortie de la bascule D 132, au niveau bas (NB) en fonctionnement normal.

Le condensateur 140 emmagasine ainsi de l'énergie en fonctionnement normal de la carte à microcircuit 200, c'est-à-dire hors contexte de détection d'une attaque.

Conformément à l'invention, la carte à microcircuit 200 comporte un fusible 250 destiné à être grillé lorsqu'une attaque est détectée, par décharge du condensateur 140.

Plus précisément, dans ce mode de réalisation, les moyens 130 de commande de la carte à microcircuit 200 sont aptes à permettre:
- le chargement du condensateur 140 en fonctionnement normal ; et
- la décharge du condensateur 140 pour griller le fusible 250 de la carte lorsqu'une attaque est détectée.

On rappelle qu'un fusible a pour rôle d'ouvrir un circuit électrique lorsque le courant qui le traverse atteint un certain seuil ; une fois le fusible grillé aucun courant ne peut passer à travers.

Dans le mode de réalisation décrit ici, le fusible 150 est relié à un interrupteur T2 contrôlé par les moyens de commande 130 pour être bloquant en fonctionnement normal et passant lorsqu'une attaque est détectée.

Dans le mode de réalisation décrit ici, l'interrupteur T2 est un transistor PMOS relié, par une porte inverseuse 134, à la sortie de la bascule D 132.

Lorsqu'une attaque est détectée, la sortie des moyens de commande 130 passe à l'état haut et l'interrupteur T2 devient passant de sorte que le condensateur se décharge dans le fusible 250.

Dans cet exemple de réalisation, on considère que cette opération est suffisamment rapide pour qu'une attaque visant à couper l'alimentation des moyens de commande 130 soit sans effet.

Le condensateur 140 est dimensionné de façon à ce que le fusible 250 grille lorsque le condensateur se décharge, l'interrupteur T2 étant devenu passant.

Grâce à l'invention, et de façon très avantageuse, la décharge du condensateur 140 n'est pas détectable par analyse de la consommation de la carte à microcircuit.

Le fait de griller le fusible 250, lorsqu'une attaque est détectée, fait basculer le signal de contrôle SC, d'un niveau haut (NH) en fonctionnement normal, vers un niveau bas (NB).

A cet effet, la carte à microcircuit 200 comporte une porte inverseuse 260, reliée au fusible 250, la sortie de cette porte inverseuse 260 constituant ledit signal de contrôle SC, le niveau de ce signal étant haut (NH) en fonctionnement normal et bas (NB) lorsqu'une attaque est détectée.

Dans le mode de réalisation de la figure 1, une résistance 240 impose un signal haut en entrée de la porte inverseuse 260, et donc un signal de niveau bas en sa sortie, lorsque le fusible 250 est grillé.

Dans le mode de réalisation de la figure 1, le signal de contrôle SC, en sortie de la porte inverseuse 260, est utilisé pour coller un signal SIV vital au bon fonctionnement de la carte à microcircuit 200 par combinaison de ces signaux SC, SIV au moyen d'une porte ET.

Ce signal vital peut par exemple être choisi parmi un signal de réinitialisation (RESET), un signal d'horloge (CLOCK), ou un signal d'entrée/sortie (I/O) en liaison avec un lecteur de ladite carte à microcircuit.

Le signal SIVS résultat de ce ET logique est donc un signal vital sécurisé par l'invention.

La **figure 2** représente une carte à microcircuit 400, qui n'est pas conforme à l'invention.

Sur cette figure, les éléments de la carte à microcircuit 400, semblables à ceux de la carte à microcircuit 200, portent les mêmes références que ceux de la figure 1.

Dans le mode de réalisation de la figure 2, le fait de griller le fusible 250, lorsqu'une attaque est détectée, fait basculer un signal de contrôle SC, d'un niveau bas (NB) en fonctionnement normal, vers un niveau haut (NH).

La carte à microcircuit 400 ne comporte pas de porte inverseuse 260, le signal de contrôle SC en sortie du fusible 250 commandant un interrupteur apte à couper l'alimentation d'un composant vital de la carte, à savoir dans cet exemple, celle d'un processeur 150.

Dans l'exemple de réalisation décrit ici, cet interrupteur est constitué par un transistor PMOS T3.

Plus précisément, dans le mode de réalisation de la figure 2, la carte à microcircuit 400 comporte un transistor T3 contrôlé par le signal de contrôle SC de sorte que :
- en fonctionnement normal, le signal de contrôle SC est à un niveau bas, et le CPU 150 est alimenté par la tension VCC ; et
- en cas de détection d'attaque, le fusible 250 grille, le signal de contrôle SC passe à un niveau haut, et le CPU 150 n'est plus alimenté.

## Revendications

1. Module (200) comportant :
- des moyens pour détecter une attaque sur ledit module; et
- des moyens de commande (130) aptes à griller un fusible (250) dudit module lorsqu'une attaque est détectée,
le module étant **caractérisé en ce qu'**il comporte une résistance (240) reliée en série audit fusible et comporte une porte inverseuse (260), **en ce que** ladite résistance (240) impose un signal haut en entrée de ladite porte inverseuse (260) lorsque ledit fusible est grillé, **en ce que** la sortie de cette porte inverseuse (260) est un signal de contrôle (SC) dont le niveau est haut (NH) en fonctionnement normal et bas (NB) lorsqu'une attaque est détectée, **en ce que** ledit signal de contrôle (SC) est utilisé pour forcer un signal vital (SIV) dudit module (200) à un niveau bas lorsqu'une attaque a été détectée, et **en ce que** le fait de griller ledit fusible fait basculer ledit signal de contrôle dudit niveau haut vers ledit niveau bas.

2. Module (200) selon la revendication 1 **caractérisé en ce que** lesdits moyens de commande (130) sont aptes à commander le chargement d'un condensateur (140) en fonctionnement normal et à commander la décharge dudit condensateur (140) pour griller ledit fusible (250) lorsqu'une attaque est détectée.

3. Module (200) selon la revendication 1 ou 2, **caractérisé en ce que** ledit signal vital (SIV) est choisi parmi un signal de réinitialisation, un signal d'horloge, ou un signal d'entrée/sortie en liaison avec un équipement externe audit module (200).

4. Module (200) selon l'une quelconque des revendications 1 à 3 constitué par une carte à microcircuit conforme à la norme ISO 7816.

## Patentansprüche

1. Modul (200), umfassend:
- Mittel zum Erfassen eines Angriffs auf das Modul und
- Steuermittel (130), die geeignet sind, eine Sicherung (250) des Moduls durchbrennen zu lassen, wenn ein Angriff erfasst wird,
wobei das Modul **dadurch gekennzeichnet ist, dass** es einen Widerstand (240), der mit der Sicherung in Reihe geschaltet ist, und ein NICHT-Gatter (260) umfasst, dass der Widerstand (240) ein hohes Signal am Eingang des NICHT-Gatters (260) aufdrückt, wenn man die Sicherung durchbrennen lässt, dass die Ausgabe dieses NICHT-Gatters (260) ein Steuersignal (SC) ist, dessen Pegel im Normalbetrieb hoch (NH) ist und niedrig (NB) ist, wenn ein Angriff erfasst wird, dass das Steuersignal (SC) verwendet wird, um ein vitales Signal (SIV) des Moduls (200) auf einen niedrigen Pegel zu zwingen, wenn ein Angriff erfasst worden ist, und dass die Tatsache, dass man die Sicherung durchbrennen lässt, das Steuersignal von dem hohen Pegel zu dem niedrigen Pegel kippen lässt.

2. Modul (200) nach Anspruch 1, **dadurch gekennzeichnet, dass** die Steuermittel (130) geeignet sind, das Laden eines Kondensators (140) im Normalbetrieb zu steuern und das Entladen des Kondensators (140) zu steuern, um die Sicherung (250) durchbrennen zu lassen, wenn ein Angriff erfasst wird.

3. Modul (200) nach Anspruch 1 oder 2, **dadurch gekennzeichnet, dass** das vitale Signal (SIV) aus einem Reset-Signal, einem Taktsignal oder einem Eingangs-/Ausgangssignal in Verbindung mit einer außerhalb des Moduls (200) befindlichen Einrichtung ausgewählt ist.

4. Modul (200) nach einem der Ansprüche 1 bis 3, das durch eine Mikrochipkarte nach der Norm ISO 7816 gebildet ist.

## Claims

1. A module (200) including:
- means for detecting an attack on said module; and
- command means (130) capable of blowing a fuse (250) of said module when an attack is detected,
the module being **characterized in that** it comprises a resistor (240) connected in series to said fuse and comprises a NOT gate (260), said resistor (240) imposing a high signal at the input of said NOT gate (260) when said fuse is blown, the output of this NOT gate being a control signal (SC) the level whereof being high (NH) in normal operation and low (NB) when an attack is detected; said control signal (SC) being used to maintain a vital signal (SIV) of said module (200) when an attack has been detected, the fact of blowing said fuse causing said control signal to flip from said high level to said low level.

2. A module (200) according to Claim 1, **characterized in that** said command means (130) are able to command the charging of a capacitor (140) during normal operation and commanding the discharging of said capacitor (140) to blow said fuse (250) when an attack is detected.

3. A module (200) according to Claim 1 or 2, **characterized in that** said vital signal (SIV) is selected from among a reset signal, a clock signal or an input/output signal connected with equipment external to said module (200).

4. A module (200) according to any one of Claims 1 to 3, consisting of a microcircuit card complying with the ISO 7816 standard.
